(19) Europäisches Patentamt
European Patent Office
Office européen des brevets

(11) EP 1 065 937 B1

(12) EUROPEAN PATENT SPECIFICATION

(45) Date of publication and mention
of the grant of the patent:
**06.11.2002 Bulletin 2002/45**

(51) Int Cl.7: **A23C 9/15**, A23D 7/015,
A23C 13/16, A23C 15/16

(21) Application number: **99914535.2**

(22) Date of filing: **23.03.1999**

(86) International application number:
**PCT/EP99/01977**

(87) International publication number:
**WO 99/051105 (14.10.1999 Gazette 1999/41)**

(54) **ACIDIFIED BUTTER LIKE SPREAD**

GESÄUERTER BUTTERÄHNLICHER BROTAUFSTRICH

GRAISSE TARTINABLE ACIDIFIEE ANALOGUE A DU BEURRE

(84) Designated Contracting States:
**AT BE CH DE DK FI FR GB IE LI NL SE**

(30) Priority: **03.04.1998 EP 98201062**

(43) Date of publication of application:
**10.01.2001 Bulletin 2001/02**

(73) Proprietors:
• **UNILEVER N.V.**
**3013 AL Rotterdam (NL)**
Designated Contracting States:
**AT BE CH DE DK FI FR NL SE LI**
• **UNILEVER PLC**
**London EC4P 4BQ (GB)**
Designated Contracting States:
**GB IE**

(72) Inventors:
• **BODOR, Janos, Unilever Research Vlaardingen**
**NL-3133 AT Vlaardingen (NL)**
• **KLEINHERENBRINK,**
**Frank,Unilever Res. Vlaardingen**
**NL-3133 AT Vlaardingen (NL)**

• **DE ROOIJ, Wim Herman,**
**Unilever Res. Vlaardingen**
**NL-3133 AT Vlaardingen (NL)**
• **VOORBACH, Wim,**
**Unilever Research Vlaardingen**
**NL-3133 AT Vlaardingen (NL)**
• **WEMMENHOVEN, Belinda,**
**Unilever Res. Vlaardingen**
**NL-3133 AT Vlaardingen (NL)**

(74) Representative: **Sikken, Antonius H. J. M. et al**
**UNILEVER N.V.,**
**Patent Division,**
**P.O. Box 137**
**3130 AC Vlaardingen (NL)**

(56) References cited:
EP-A- 0 800 769          WO-A-97/04660
WO-A-97/08956          DE-A- 2 300 663
DE-A- 3 324 821          US-A- 3 962 464
US-A- 4 772 483

**Description**

**Field of the invention**

The present invention relates to a process for the preparation of a spreadable, acidified cream, and to spreadable creams obtainable by said process. In particular the invention provides spreadable creams having a fresh taste, a smooth, creamy mouthfeel and a butter like texture and melting behaviour.

**Background of the invention**

There is a continuous desire among consumers for spreadable products that resemble traditional butter in mouthfeel and texture, but on the other hand are spreadable at refrigeration temperature, and have a fresh taste.

Besides being not spreadable at refrigeration temperature, butter has a very high fat content. Furthermore butter has a bland taste that may be considered very fatty and heavy in the mouth by modern consumers. There is a clear desire for more fresh tasting products, which are spreadable at refrigeration temperature, but will have a smooth, creamy mouthfeel and a fresh taste. Fresh taste is herein defined as instant delivery of water soluble taste and flavour components, upon consumption.

A further desire is that these products show little or no syneresis, which is water loss upon increase of the temperature of the product to room temperature.

US-4,177,293 discloses a butter spread comprising 19-48 wt% fat and a relatively high protein content of about 4.6-7.7 wt%. By repeated homogenization of a mixture of cream and vegetable oil, enriched with dried milk or protein concentrate, and by addition of a stabilizer a consistency similar to butter and good spreading characteristics are achieved.

US-4,769,255 describes a method for preparing a butter like composition which is spreadable at refrigeration temperature. The butter like composition comprises both a water-in-oil emulsion and an oil-in-water emulsion in a weight ratio of at least 6 to 4. Said products are predominantly oil continuous and therefore are believed not to give a fresh taste impression upon consumption.

US-4,772,483 discloses a product and process for preparing an all-dairy butter substitute. Cream with a butterfat content of about 40% is homogenized and heated to about 125 °F (51 °C). To the heated mixture are added salt, mono-and diglycerides, non-fat dry milk, locust bean gum, lecithin, potassium sorbate and citric acid. The resulting mixture is pasteurized, homogenized and packed. The protein content of the product is for example 2.3 wt%. It has been found that products disclosed herein, are non acidified soft products, that are very stable oil in water emulsions, that do not exhibit butterlike melting behaviour.

EP 0 800 769 A discloses a process for preparing a dairy spread comprising an acidified and homogenised cream.

US-3,962,464 discloses a process for preparing a butterlike dairy product which process comprises a specific acidification step. It has been found that products prepared according to this process are soft, pourable products.

DE-A-3,324,821 discloses a spread, based on soured cream. A cream comprising skim milk powder, starch and gelatin is heated to 110 °C, cooled and fermented to pH 4.0-4.5. Optionally other ingredients are added. The mixture is cooled to about 4 °C and left for crystallization in a fermentation tank. The resulting product is homogenized and packed.

None of these documents disclose a product that is derived from an acidified cream and that has a butter like texture, is spreadable, has a Stevens value at 5 °C of 200-1000 g, preferably 300-800 g, most preferred 400-800 g and results in a smooth, creamy mouthfeel but at the same time gives a fresh not sour taste impression upon consumption.

Many known products have a high protein content. However these proteins upon acidification and coagulation will form a dense, cheese like texture very unlike the preferred butter like texture of the current invention. In these products allegedly the high protein content is necessary to obtain a product of desired firmness.

A further disadvantage of the known products is that the high protein content will prevent the formation of a butter like texture. Furthermore said products are believed to taste sour and to have a stable structure, resulting in a "thick" mouthfeel.

The current invention is aimed at acidified creams having a butter like texture and a butter like melting behaviour. It is believed that the melting behaviour of known cheese like products will be markedly different from the melting behaviour of butter. A suitable description of butter like texture and butter like melting behaviour of products according to the invention is given below.

Other known products comprising cream have a low protein content of about less than 3 wt%, but these products do not show the required firmness and furthermore said products are believed to be very stable, such that they do not show butterlike melting behaviour. Such products are spoonable or pourable at refrigeration temperature.

## EP 1 065 937 B1

The present invention aims at spreadable, water-continuous acidified creams which are very suitable as butter-replacement for cold uses, such as spreading on bread or toast, for example as an underlayer.

## Summary of the invention

The present invention provides a process suitable for the preparation of a spreadable, acidified cream having a conductivity of 0.1-50 mScm$^{-1}$ at 10 °C, comprising 40 to 80 wt% fat, up to 3 % protein, the cream having a pH value of below 5.8, a Stevens hardness value at 5°C of 200-1000 g, and a Stevens hardness value at 20°C of 50-300 g, a free fat content (defined as the amount of fat liberated by subjecting the product to a heat treatment at 65 °C up to one hour) of 30-85 wt% on total fat, and said cream showing one of the following characteristics (A, B, C) :

(A) after heating for 32 seconds from 20 to 38°C, a viscosity of less than 10 Pa.s, preferably 0.05-10 Pa.s, more preferred 3-10 Pa.s, most preferred 5-8 Pa.s at a shear rate of 10 s$^{-1}$;

(B) after heating for 32 seconds from 20 to 38°C, followed by a slow increase of temperature to 40°C over a period of 270 seconds, a viscosity between 0.05 and 2.5 Pa.s, more preferred between 0.05 and 2 Pa.s, even more preferred between 0.05 and 1.6 Pa.s, most preferred between 0.1 and 1.4 Pa.s at a shear rate of 10 s$^{-1}$;

(C) in one interval of 4 seconds during the 32 second measurement period, wherein the product is heated from 20 to 38°C, an average decrease in viscosity of 2-15 Pa.s per second at a shear rate of 10 s$^{-1}$;

wherein the process comprises the steps:

a) an emulsion of fat in aqueous phase is prepared at 10-60°C;
b) the emulsion is homogenized at 150-200 bar;
c) the emulsion is cooled to the acidification temperature of 20-50°C;
d) the emulsion is acidified to a pH of less than 5.8;
e) optionally other ingredients such as gelatin, thickeners, stabilizers, flavour, colouring agents, preservatives, salt are added;
f) the emulsion is subjected to a heat treatment at 60-90°C for 5 seconds to 15 minutes, preferably under low shear;
g) the emulsion is homogenized at 60-90°C and at 50 to 150 bar;
h) the emulsion is optionally cooled to 5-60°C;
i) the product is filled in the package and cooled to 5-15°C;
j) the packed product is left to stabilize for 1-10 days at 5-15°C.

Further, the present invention provides a spreadable, acidified cream obtainable by the process described above.

## Detailed description of the invention

For the purpose of the invention, dry matter is defined as "all non volatile components of a product". This includes fat, protein, carbohydrates, minerals.
In this description and claims the expression "spreadable cream" is intended to mean a plastic, spreadable cream which can be applied onto bread both at refrigerator temperature and at room temperature without tearing the bread. The spreadable creams of the present invention have a Stevens value at 5 °C of 200-1000 g and a Stevens value at room temperature (about 20 °C) of 50-300 g. The product according to the invention shows low resistance to spreading, unlike traditional butter.
For the purpose of the invention "cream" is defined as a dairy or vegetable fat containing, predominantly water continuous emulsion. The term cream is furthermore used in combination with the prefix "dairy" to indicate starting material comprising emulsified dairy fat.
Spreadable products comprising cream have for example been described in EP-A-347009 or EP-A-63389. These documents disclose compositions comprising cream or acidified cream as the dispersed aqueous phase, present in a continuous fatty phase. It is believed that crystallized fat constitutes the basis for the firmness of these products. These products are not water continuous and will hence not show the fresh taste impression that is part of the mouthfeel of the product according to the invention.
Applicants believe that the butter like texture of predominantly water-continuous products of the invention is caused by the presence of two types of fat structures; the so called intact fat globules and the so called free fat. Free fat is generally present in the form of less stable fat globules.

The free fat structure in the product of the invention is characterized by loose bridged aggregates of these fat globules. The bridging or coalescence is thought to occur between these fat globules of free fat.

Intact fat globules are individual fat structures, fully stabilized by the presence of proteins. The intact fat globules are substantially neither bridged nor aggregated.

Upon heating applicants believe that the free fat structure will melt, collapse and separate from the emulsion, resulting in reduced in-mouth viscosity and providing a taste sensation of the fat soluble flavours, while the melting of the intact fat globules ensures a long lasting creamy mouthfeel.

The presence of these 2 types of structures of fat is believed to enable the spreadable consistency, combined with the desired in-mouth melting properties of products according to the invention. The presence of both intact (non-bridged nor aggregated) fat globules and free fat in the form of bridged fat globules is believed to represent a butter like texture in the sense that two fat structures with different melting behaviour can be identified both in butter and in the product according to the current invention.

Products according to the invention have excellent mouthfeel upon consumption. The product melts in the mouth and the structure breaks up due to the high temperature. A first impression of the fat soluble flavours is followed by a creamy, fresh taste impression.

Nonetheless products according to the invention can be clearly distinguished from butter and margarine-like products both due to the substantially fat continuous character of the latter and due to the lower percentage of non-bridged fat structure in products according to the invention.

The method to measure the amount of free fat present in the product at 65 °C is further illustrated in the examples.

The amount of free fat present in products according to the invention at 65 °C is 30-85 wt%, preferably 40-80 wt%, more preferably 50-75 wt% of the total amount of fat present. The remainder of the fat is present as intact fat globules.

Applicants believe that the butter like melting behaviour of products according to the invention can be expressed as a change in viscosity values at a shear rate of 10 s$^{-1}$ within a defined temperature traject.

The method to determine said viscosity is illustrated in the examples. All viscosity data which are indicated in this application have been determined by this method and under the conditions as disclosed for this method.

According to this method to measure said viscosity the composition at question is heated from 20 to 38 °C in a period of 32 seconds. During the heating the viscosity is measured at a shear rate of 10 s$^{-1}$. After said 32 seconds said compositions are subjected to a very slow increase of temperature to 40 °C over a period of 270 seconds under a shear rate of 10 s$^{-1}$ (see examples).

It has been found that for compositions according to the invention having a butter like melting behaviour, preferably at least one of the following characteristics occurs when said compositions are subjected to the above method of heating under shear:

(A) after 32 seconds wherein the products are heated from 20 to 38 °C a viscosity of less than 10 Pa.s, preferably 0.05-10 Pa.s, more preferred 0.5-10, even more preferred 3-10 Pa.s, most preferred 5-8 Pa.s at a shear rate of 10 s$^{-1}$.

(B) after heating for 32 seconds from 20-38 °C, followed by a slow increase of temperature to 40 °C over a period of 270 seconds, a viscosity between 0.05 and 2.5 Pa.s, more preferred between 0.05 and 2 Pa.s, even more preferred between 0.05 and 1.6 Pa.s, most preferred between 0.1 and 1.4 Pa.s at a shear rate of 10 s$^{-1}$;

(C) the products according to the invention show in one interval of 4 seconds during the 32 second measurement period as indicated above, an average decrease in viscosity of 2-15 Pa.s per second at a shear rate of 10 s$^{-1}$.

Preferably the products according to the invention show two of the above characteristics (A-C), most preferred all characteristics (A-C).

It is believed that the substantial water-continuity of products according to the invention plays a large role in the freshness and light impression of said product. In combination with this fresh mouthfeel, the product gives a non-sticky creamy mouthfeel but leaves no fatty impression.

The water continuity of the product can be demonstrated by determination of the conductivity of the spread. This method is illustrated in the examples.

Predominantly water continuous implies that the conductivity of products according to the invention is 0.1-50 mScm$^{-1}$, preferably 0.1-10 mScm$^{-1}$, at 10 °C.

The presently claimed cream derives its taste partly from having been acidified, i.e. at least part of the dairy ingredients having been subjected to the influence of either an edible acidifying agent or to the influence of acidulating micro-organisms like lactic acid bacteria and cheese starter cultures or to the action of an acid generating compound such as gluconodeltalactone.

Accordingly products according to the invention have a pH value of less than 5.8, preferably less than 5.6, more preferably between 4.0 and 5.6, even more preferably between 4.6 and 5.2, and most preferred between 4.7 and 5.0.

Creams according to the invention comprise more than 35 wt% fat, preferably 40-80 wt% fat, more preferably 40-70 wt% fat, most preferred 45-60 wt% fat.

Said fat can be of dairy origin, but it is also possible to exchange part or all of the dairy fat with vegetable fat. Preferably at least 20 wt% butter fat is present on the total amount of fat. More preferably the amount of butterfat to vegetable fat is in the weight range of 20/80 to 80/20. Most preferred the weight ratio of butterfat to vegetable fat is between 40/60 and 60/40.

The dairy fat present in products according to the invention can suitably be obtained from the dairy source used, such as dairy cream, butter, butterfat or fractions thereof, whole milk, protein enriched milk, concentrated milk, filled milk, fresh cheese, cream cheese or mixtures of two or more thereof, the use of dairy cream as at least one fat source being preferred.

The vegetable fat can be derived from any vegetable fat source. The vegetable fat is preferably selected from the group consisting of palm oil, palm kernel oil, soy bean oil, sunflower oil, rape seed oil, coconut oil, rice bran oil, and combinations thereof; either as such or fractionated, hardened or interesterified.

The solid fat content of the fat blend of products according to the invention is preferably indicative of fast in-mouth melting. Preferred blends melt more steep than butter. Preferably for the fat blend of the product according to the invention, $N_{10}$ is between 40 and 80, $N_{25}$ is between 5 and 15 and $N_{35}$ is between 0 and 5. Preferably the difference between $N_{10}$ and $N_{25}$, for products according to the invention is between 35 and 65. The solid fat content on total weight of the fat blend can be measured according to the known pulse NMR method (ref. Fette, Seifen, Anstrichmittel 1978, 80, nr. 5, pp. 180-186).

Products according to the invention contain less than 3 wt% of protein. It was found that if more protein is present, a thick, cheese-like product is obtained. Preferably, the protein level ranges between 0.1 and 3 wt%, more preferably between 0.8 and 2.3 wt%, most preferred between 0.8 and 1.8 wt%.

The protein present preferably is milk protein and can suitably be derived from the dairy source used such as dairy, skim milk, butter milk, concentrated milk protein, butter serum, whey protein, whole milk, fresh cheese, another suitable milk protein source or mixtures thereof.

Besides proteins present in the dairy cream which is used as starter material, additional protein may be added to the product according to the invention. A preferred source of additional protein is butter serum. It is believed that the presence of phospholipids in butter serum contributes to a better, thinner mouthfeel and destabilization of the emulsion upon melting in the mouth.

Preferably 0.01-1 wt%, more preferred 0.05-0.3 wt% of protein derived from butter serum is present in products according to the invention.

Optionally phospholipids, preferably lecithin, may be present in the product according to the invention in an amount of 0.05-0.5 wt%, preferably 0.1-0.4 wt%, most preferred 0.1-0.3 wt%.

Said phospholipids can be derived from for example a dairy source such as dairy cream, butter or from a vegetable source.

Preferably products according to the invention comprise 0.1-10 wt%, more preferred 0.5-6 wt% most preferred 0.1-3 wt% of phospholipids on the total amount of proteins present.

For obtaining the desired structure and mouthfeel, it is preferred that the ratio of the fat content to protein content in the product is within the range of from 70:1 (weight ratio) to 12:1 (weight ratio), preferably 60:1 to 25:1, most preferred 40:1 to 30:1, in combination with a fat content of more than 35 wt% and a protein content of less than 3 wt%, preferably less than 2.3 wt%.
Products comprising a lower fat to protein weight ratio are believed to show a more dense structure, dominated by protein coagulation. This is not intended for the product according to the invention.

Products according to the invention are characterized by a Stevens value hardness at 5 °C of 200-1000 g, preferably 300-800 g, most preferred 400-800 g and a Stevens value hardness at 20 °C of 50-300 g, preferably 75-200 g. This Stevens value hardness at 5 °C is believed to be higher than generally would be expected for products based on acidified cream, comprising less than 3 wt% protein and more than 35 wt% fat.

Preferably the dry matter content of the product according to the invention is between 30 and 70 wt%, more preferably 40-70 wt%, most preferred between 50 and 65 wt% on total product.

For obtaining even better texture and mouthfeel 0.1-1 wt%, preferably 0.1-0.7 wt% of a protective hydrocolloid or another structuring agent selected from the group of agar, alginate, starch, gelatin, xanthan, locust bean gum, gelatin or gelatin replacers, carboxy methyl cellulose, guar gum or mixtures thereof, may be present in products according to the invention. Other suitable agents not mentioned here can be applied as well. More preferred, said protective hydrocolloid is gelatin or a gelatin replacer.

Addition of a small amount of a protective hydrocolloid to the product of the current invention results in a surprisingly high improvement in the butter like texture and reduced syneresis. It is believed that said protective hydrocolloid immobilizes the water phase around the intact fat globules to reduce bridging between said intact fat globules. This way a product with an increased creamy mouthfeel results as an increased amount of intact fat globules is believed to be present in products comprising a small amount of protective hydrocolloid.

Optionally, up to 0.3 wt%, and preferably up to 0.2 wt%, based on the total weight of the end product, of an emulsifier is present. The emulsifier can be selected from the group consisting of monoglycerides, diglycerides, lactylates, polyglycerol esters, diacetyl tartaric esters and mixtures thereof.

Optionally, additives such as salt, herbs, spices, flavours, colouring matter, preservatives and the like may be added, although it is believed that if the butter like spread according to the invention is used as an underlayer, none of these is required. Normally, for use as a butter like spread at least some salt will be added. The preferred amount of salt is 0.01-2%.

A preferred embodiment of the current invention relates to a spreadable water continuous acidified cream comprising

(a) 40-70 wt% fat of which fat at least a part is of dairy origin,
(b) 0.01-1 wt% butter serum protein
(c) pH 4.5-5.0
(d) a total protein content of less than 2.3 wt%
(e) a Stevens value hardness at 5 °C of 400-800 g
(f) a free fat content (as defined herein) of 50-75 wt% on total fat
(g) said cream having a butter like melting behaviour as evidenced by a viscosity after 32 seconds (as defined herein) of less than 10 Pa.s at a shear rate of 10 s$^{-1}$.

The process for the preparation of products according to the invention comprises the following steps:

a) an emulsion of fat in aqueous phase is prepared at 10-60 °C;
b) the emulsion is homogenized at 150-200 bar;
c) the emulsion is cooled to the acidification temperature of 20-50 °C;
d) the emulsion is acidified to a pH of less than 5.8, preferably less than 5.6, more preferably between 4.0 and 5.6, more preferably between 4.6 and 5.2, and most preferred between 4.7 and 5.0;
e) optionally other ingredients such as gelatin, thickeners, stabilizers, flavour, colouring agents, preservatives, salt are added;
f) the emulsion is subjected to a heat treatment at 60-90 °C for 5 seconds to 15 minutes, preferably under low shear;
g) the emulsion is homogenized at 60-90 °C and at 50 to 150 bar;
h) the emulsion is optionally cooled to 5-60 °C;
i) the product is filled in the package and cooled to 5-15 °C;
j) the packed product is left to stabilize for 1-10 days at 5-15 °C.

The process according to the invention can be carried out as a batch process or as a continuous process. All process steps may be carried out accordingly as batch process steps or continuous process steps or as a combination thereof. For example the optional heat treatment according to step (f) may be carried out batch wise in a vessel or as in line heating.

The homogenisation of the product is carried out in two separate homogenisation steps, before and after acidification in order to obtain the desired product structure.

The homogenisation before acidification (step b) is preferably carried out at a temperature of 40-60 °C, at 150-200 bar. Optionally said first homogenisation is carried out as a two stage homogenisation whereby in a second stage the homogenisation pressure is lower than in the first stage. Pressures in the second stage are preferably below 100 bar, more preferred below 50 bar.

The homogenisation after acidification (step g) is preferably carried out at the same or a lower homogenisation pressure, than the first homogenisation (step b). Said second homogenisation is preferably carried out as a single stage homogenisation.

The acidification in step (d) can be performed chemically or microbiologically or with an acid generating substance such as gluconodeltalactone. If the emulsion is microbiologically acidified, the acidifying culture can be for example a multispecies starter comprising one or more strains selected from the group of species of *Lactococcus lactis,* subsp. *cremoris, Lactococcus lactis* subsp. *lactis, Lactococcus lactis* subsp. *lactis* var. *diacetylactis, Leuconostoc mesenteroides* subsp. *cremoris,* yogurt starter cultures (mixture of *Streptococcus thermophilus* and *Lactobacillus delbreuckii* subsp. *bulgaricus),* or mixtures thereof.

According to another embodiment multispecies thermophilic starters are applied comprising strains selected from the group of *Lactobacillus acidophilus, Lactobacillus helveticus, Lactobacillus casei,* Bifidobacteria or any combination of strains providing that the acidification goes as far as needed, i.e. preferably to a pH below 5.8. In a preferred embodiment of the invention a multispecies starter comprising *Lactobacillus lactis* subsp. *cremoris, Lactococcus lactis* subsp. *lactis, Lactococcus lactis* subsp. *lactis* var. *diacetylactis* and *Leuconostoc mesenteroides* subsp. *cremoris* is used.

The fermentation is stopped in a suitable manner - such as by heating - at a pH value below 5.8, preferably below 5.6, more preferably between 4.0 and 5.6, even more preferably between 4.6 and 5.2, and most preferred between 4.7 and 5.0.

Preferably the acidification is carried out at a temperature of 18-50 °C.

If a heat treatment is used to stop fermentation, then preferably this heat treatment is carried out at a temperature of more than 58 °C, more preferred between 58 and 90 °C for 0.1-30 minutes, preferably 1-10 minutes, after step (d).

Another suitable way to carry out said heat treatment is using for example a tubular heat exchanger in a continuous process. Shorter heating times are then obtained.

Said heat treatment can be chosen such that either the culture used for acidification is inactivated, or stays (partly) active to make further ripening in the package possible.

If after fermentation a compound such as potassium sorbate is added, which may result in an increased pH, the pH after fermentation is preferably reduced accordingly for example to pH 4.5 to compensate for said increase in pH.

According to a preferred embodiment the acidification is stopped at pH 4.3-4.6 and subsequently in step (e) 0.02-1 wt% potassium sorbate is added after which preferably a pH of between 4.7 and 5.0 is reached.

According to yet another embodiment, the acidification is continued until a pH of below 5.8 has been reached. Subsequently the pH can be further adjusted upwards or downwards. The pH can for example be corrected upward using potassium citrate, dairy cream or non-acidified milk.

Optionally in step (e) other ingredients such as gelatin, thickeners, stabilizers, flavour, colouring agents, preservatives, salt are added. If desired, a further fatty phase can be added at this stage.

After acidification, according to step (f) the emulsion is subjected to a heat treatment at 60-90 °C for 0.1 to 15 minutes, preferably 1-15 minutes, preferably under low shear. Applicants believe that the use of a heat treatment between 60 and 90 °C is beneficial to give the product the desired firmness, indicated by a Stevens value at 5 °C of 200-1000 g.

After acidification and the subsequent heat treatment and optional homogenisation, the product is preferably hot filled at a temperature of 60-90 °C, preferably 75-85 °C into containers and then the containers are cooled to a temperature of 5-15 °C, preferably 5-10 °C.

According to an alternative embodiment as indicated in step (h) above, the product is cooled to a packing temperature of 5-60 °C, preferably 8-30 °C, most preferred 10-15 °C and thereafter filled at that temperature.

According to an alternative embodiment the product can be foamed by treating for example with nitrogen, $CO_2$ or mixtures thereof, before filling.

It is preferred that the filled containers remain undisturbed for some time after filling to allow the final texture of the product to develop. Preferably the containers are left undisturbed at 5-15 °C for 1-6 days.

It is believed that a typical, butter like texture with two different fat phases as indicated above in the specification, can develop favorably under undisturbed conditions after filling the product in the package.

It is also an object to provide a mildly neutral tasting product having a closed keepability of several weeks. In a preferred embodiment, the products of the invention have a closed keepability of 8 weeks or more, which means that no change of taste and structure occurs on storage for such a period.

For obtaining an increased closed keepability the cream is filled into containers while preferably at a temperature in excess of 65°C which containers then are hermetically sealed. By filling at a temperature in excess of 70°C, a still better keepability is obtainable. By this higher temperature, the shelf life of the product in the closed container can be 8 weeks or even more.

The product according to the current invention can be used as butter alternative in cold applications such as an underlayer on bread. Furthermore the product according to the invention is also suitable for use in warm and hot applications such as baking applications, use as an ingredient of a sauce and use in shallow frying applications.

The invention also regards composite food products such as creams, spreads, yogurt spreads, sauces comprising at least 30 wt% of the acidified cream according to the invention.

The invention will be illustrated by the following examples.

In this application the terms oil and fat are used interchangeably.

**Examples**

Description of techniques

Determination of Stevens value

The "Stevens" hardness (St), expressed in grams, is determined 1 week after manufacturing. The product is stored at 5°C and thereafter equilibrated for 24 hours at a temperature of 5 or 20 °C as indicated. The Stevens value is measured using a 0.5 inch⌀ (1.27 cm) cylindrical penetration probe and a Stevens-LFRA Texture Analyzer (ex Stevens Advanced Weighing Systems, Dunmore, U.K.) or SMS texture analyzer XT2 (ex Stable microsystems, Surrey UK). The load range is 1000 g for LFRA and 25000 g for SMS TA-TX2 equipment. The Stevens LFRA Texture analyzer is operated in the "normal" mode and set at 10 mm penetration depth and 2 mm/s penetration rate.

Determination of free fat content at 65 °C

Free fat is the amount of fat liberated by subjecting the sample suspended in water to a heat treatment up to 65 °C up to 1 hour. The butyrometer which is used is the butyrometer for measuring the fat content in cheese (ex Fischer, scale 0-40% fat, 3 g sample input).
Said butyrometer is closed at the small end and is filled with water at a temperature of about 65 °C to half the bulb.
The product which has been stored at 5 °C for at least 16 hours, is transferred in an amount of 2-3 grams into a butyrometer for measuring the fat content in cheese. The weight of the sample is recorded (W (g)).
The butyrometer is subsequently closed at the big end, inverted and the small stopper is removed. After gentle vortexing (Retsch mix TM01, speed 30%) to disperse the sample the butyrometer is placed in a water bath at a temperature of about 65 °C for 10 minutes. The butyrometer is then gently vortexed (Retsch mix TM01, speed 30%) and water at a temperature of about 65 °C is added through a small opening up to the top of the bulb of the butyrometer. The butyrometer is then placed in a Gerber[tm] centrifuge capable of keeping the temperature at 65 °C and centrifuged for 15 minutes at 500 g. Afterwards the butyrometer is carefully filled up to the 35% mark with water at a temperature of about 65 °C. Said butyrometer is centrifuged at 500 g for another 15 minutes. Finally the butyrometer is read. The top layer consists of separated free fat.
The amount of free fat is expressed as the weight percentage on total fat. The following formula is used:

$$\text{free fat (\%)} = (((R1-R2)*3/W)/\text{fat percentage of sample})* 100$$

wherein:

R1 = top of separated clear fat layer (%)
R2 = bottom of clear fat layer (%)
W = amount of sample (g)
3 = apparatus constant for butyrometer (g)

Determination of Conductivity

Conductivity was measured via a common procedure with a conductometer (Philips type pw 9526 Digital conductometer) and a measuring cell consisting of two metal plates (cell constant being 0.13 cm$^{-1}$). The measuring cell was calibrated using a KCl solution with a known conductivity.
The sample was measured by pressing the plates in the product and reading the conductometer.

Viscosity measurements

Determination of the Viscosity during melting (Fast Viscosity Direct Measurement method) is carried out as follows.
The viscosity of the sample is measured with a Physica Reometer type Reolab MC 100[tm]. The readings were taken, stored and evaluated on a personal computer equipped with the OTTI software. The reometer is equipped with a cone plate configuration (diameter of the cone is 4 cm) and the plate is temperature adjustable. The gap between the cone and the plate is set to 0.5 mm.
A sufficient amount of sample is placed on the plate to fit between the cone and plate. After positioning the cone, the surplus is wiped away. After applying the sample 5 minutes of time is taken to equilibrate the sample at 20 °C being the temperature of the plate. The shear rate of the cone is set to 10 s$^{-1}$.

The measurement is started by starting the reometer and changing the temperature of the plate from 20 to 38 °C after 4 seconds in a period of 32 seconds. Subsequently the temperature of the product is slowly raised to 40 °C over a period of 270 seconds maintaining a shear rate of 10 s$^{-1}$. Readings of viscosity are taken at 4 second intervals during 0-360 seconds.

Applicants believe the results may be interpreted as follows:

Time vs. viscosity gives a value for the "change in mouthfeel" during melting.

The first part of the measured curve gives the rate of decrease of viscosity. This parameter is calculated by taking the average viscosity change per interval of 4 seconds in the first 32 seconds of the measurement.

The viscosity is read at 32 seconds to give a value for the viscosity of the "melted product". For products according to the invention the viscosity after 32 seconds wherein the temperature is raised from 20 to 38 °C under a shear rate of 10 s$^{-1}$ is preferably less than 10 Pa.s.

• The end of the curve (302 sec) gives the viscosity of the sample when it is completely melted and worked. For products according to the invention the viscosity after heating for 32 seconds from 20-38 °C at a shear rate of 10 s$^{-1}$, followed by a slow increase of temperature to 40 °C over a period of 270 seconds at a shear rate of 10 s$^{-1}$, between 0.05 and 2.5 Pa.s.

### Example 1

Procedure to produce up to 100 kg of the specified product. The product composition is shown in table I.

Butter serum powder (BAEF ex Corman) was added to 2 l melted vegetable fat (50 °C) and this mixture was homogenized in a turrax (Janke&Kunkel type 145 type) at a speed of 6 for 2 minutes. The resulting mixture (and the remaining melted vegetable fat) was added to the dairy cream ( at 50 °C) while mixing (Terlet 1501 vessel, stirrer speed 80 rpm) to form a course pre-emulsion. The resulting mixture was homogenized at 50 °C, 200 bar (Gaulin Lab100-5PA, flow: 200 l/h). Subsequently the resulting emulsion was cooled to 28 °C (Terlet 50 l vessel, slow intermediate mixing at 20 rpm). The emulsion was acidified with 0.025 wt% of a mixture of cultures comprising *Lactococcus diacetylactis* A ex Wiesby and a Probat 505 starter mixture ex Wiesby comprising *Lactococcus lactis* subsp. *lactis, Lactococcus lactis* subsp. *cremoris, Lactococcus lactis* subsp. *lactis* var. *diacetylactis, Leuconostoc mesenteroides* subsp. *cremoris.* The emulsion was acidified until a pH of 4.5 was reached. After acidification carboxymethyl cellulose (7H 4XF, ex Hercules), gelatin (bloom 250, ex PB Gelatin, Ierseke), salt, sorbate, and carotene were added. The ingredients were blended for 1 minute at 1500 rpm (55 °C)in a Wolff cutter$^{tm}$ ex Wolf apparatebau GmbH, and heated at 85 °C for 5 minutes (350 rpm). Subsequently the mixture was homogenized at 100 bar (Gaulin LAB60-10TBS, 60 l/h) at 85 °C. The product was then hot filled at 85 °C and the sealed packages were left undisturbed at 5 °C for 6 days.

### Example 2

Product composition is shown in table I.

Procedure is the same as for example 1 except for the following modifications. The acidified mix was homogenized at 100 bar (Gaulin LAB60-10TBS, 60 l/h) at 85 °C. The outlet of the homogenizer was connected to a static mixer (length: 2m, internal diameter: 19mm). The product was cooled to a temperature of 25-30 °C and packed. The sealed packages were left undisturbed at 5 °C for 6 days.

### Example 3

Product composition is shown in table I.

Fresh cream cheese and dairy cream (50 °C) were mixed to form an emulsion (6 minutes in a turrax ex Janke&Kunkel, speed 6). Subsequently the resulting emulsion was cooled to 42 °C. The emulsion was acidified with 2.5 wt% of a pre-culture of MSKR1. (preparation of pre-culture according to instructions by Wiesby). The emulsion was acidified until a pH of 4.5 was reached. After acidification carboxymethyl cellulose (7H 4XF, ex Hercules), gelatin (bloom 250, ex PB Gelatin, Ierseke), salt, sorbate, and carotene were added. The ingredients were blended for 1 minute at speed 15 (55 °C)in a Stephan$^{tm}$ (Stephan UMC 5 electronic) and heated at 85 °C for 5 minutes (speed 6). Subsequently the mixture was homogenized at 100 bar (Rannie minilab 830H, 10 l/h) at 85 °C. The product was then hot filled at 85 °C and the sealed packages were left undisturbed at 5 °C for 6 days.

Table I,

| product composition | | | |
|---|---|---|---|
| Ingredients | Example 1 (wt%) | Example 2 (wt%) | Example 3 wt% |
| Butter | 6.1 | 6.1 | |
| vegetable fat (1) | 22 | 22 | |
| Dairy cream 40% | 70 | 70 | |
| Dairy cream 60% | | | 89 |
| Fresh cream cheese(2) | | | 10 |
| Butter serum powder | 0.5 | 0.5 | |
| carboxymethy 1-cellulose | 0.25 | 0.25 | 0.25 |
| Gelatin | 0.25 | 0.25 | 0.25 |
| salt | 0.2 | 0.2 | 0.3 |
| potassium sorbate | 0.07 | 0.07 | 0.12 |
| β-carotene | 6-7 ppm | 6-7 ppm | |

(1): Palm kernel oil ex Loders Croklaan IMCO DP 3115, N line: 20 °C: 26, 30 °C: 2, 35 °C: 0.

(2): Fresh cream cheese is a base product, characterized by a dry matter content of 52 wt%, protein content of 7 wt%, pH 4.7-4.8, fat content 43 wt%.

Water was added to ad up to 100%.

The products that result are characterized in table II.

All measurements were carried after the product had been maintained at 5 °C for 5 days.

Table II:

| product characterization | | | |
|---|---|---|---|
| | Example 1 | Example 2 | Example 3 |
| fat content (wt%) | 55 | 55 | 59 |
| protein content (wt%) | 1.6 | 1.6 | 2.5 |
| pH | 4.78 | 4.86 | 4.92 |
| Stevens value 5 °C, (g) | 746 | 759 | 276 |
| dry matter (wt%) | 61.44 | 61.21 | 67 |
| conductivity (mScm$^{-1}$, 10 °C) | 1.9 | 1.9 | ND |
| free fat content (wt/wt%) | 66 | 71 | ND |
| Viscosity (Pa.s) after 32 seconds (as defined) | 2.9 | ND | ND |
| slope (Pa.s.s$^{-1}$) 12-16 sec 16-20 sec | 8 5 | | |
| Viscosity (Pa.s) after 302 seconds (as defined) | 0.6 | ND | ND |
| ND: Not determined | | | |

All products are spreadable from the refrigerator, show a butter like texture, have a fresh taste and a creamy, smooth mouthfeel.

All products showed little or no syneresis.

**Example 4**

The product composition is shown in table III.

Butter serum powder (BAEF ex Corman) was added to melted vegetable fat (50 °C) and this mixture was suspended with a turrax (Janke&Kunkel type 145 type) at a speed of 6 for 2 minutes. The resulting mixture (and the remaining melted vegetable fat) was added to the dairy cream ( at 50 °C) while mixing (Terlet 1501 vessel, stirrer speed 80 rpm) to form a course pre-emulsion. The resulting mixture was homogenized at 50 °C, 100 bar (Gaulin Lab100-5PA, flow: 200 l/h). Subsequently the resulting emulsion was cooled to 28 °C in a tubular heat exchanger. The emulsion was acidified with 0.025 wt% of a mixture of cultures comprising *Lactococcus diacetylactis* A ex Wiesby and a Probat 505 starter mixture ex Wiesby comprising *Lactococcus lactis* subsp. *lactis, Lactococcus lactis* subsp. *cremoris, Lactococcus lactis* subsp. *lactis* var. *diacetylactis, Leuconostoc mesenteroides* subsp. *cremoris.* The emulsion was acidified until a pH of 4.5 was reached. After acidification carboxymethyl cellulose (7H 4XF, ex Hercules), gelatin (bloom 250, ex PB Gelatin, Ierseke), salt, sorbate, and carotene were added. The ingredients were blended for 1 minute at 1500 rpm (55 °C)in a Wolff cutter[tm] ex Wolf apparatebau GmbH, and pasteurized by in line heating from 55 to 75 °C in a few seconds.

Subsequently the mixture was homogenized at 50 bar (Nivo Soavi, Parma Italy, 10l/h type PANDA SN 3354) at 75 °C. The product was then hot filled at 75 °C and the sealed packages were left undisturbed at 5 °C for 6 days.

## Example 5

The product composition is shown in table III.

The process of example 4 was used, with the modification that after the last homogenisation step, the product was cooled in line to 25 °C before filling and packaging. Packages were left undisturbed at 5 °C for 6 days.

## Example 6

The product composition is shown in table III.

The process of example 5 was used.

Table III,

| product composition examples 4-6 | | | |
|---|---|---|---|
| Ingredients | Example 4 (wt%) | Example 5 (wt%) | Example 6 (wt%) |
| vegetable fat(1) | 22 | 22 | |
| Dairy cream 40% | 76.61 | 76.66 | 34.8 |
| Fat (2) | | | 33.8 |
| Butter milk powder | | | 2.7 |
| Butter serum powder | 0.5 | 0.5 | 0.43 |
| carboxymethyl -cellulose | 0.25 | 0.25 | 0.28 |
| Gelatin | 0.25 | 0.25 | 0.8 |
| salt | 0.25 | 0.2 | 0.2 |
| potassium sorbate | 0.07 | 0.07 | 0.06 |
| β-carotene | 6-7 ppm | 0.07 | 0.06 |

Balance to 100% is made with water (1): Palm kernel oil ex Loders Croklaan IMCO DP 3115, N line: 20 °C: 26, 30 °C: 2, 35 °C: 0.

(2) Fat blend consisting of coconut oil, fractionated palm olein and soy bean oil. $N_{10}$=35.

Table IV:

| product characterization examples 4-7 | | | |
|---|---|---|---|
| | Example 4 | Example 5 | Example 6 |
| fat content (wt%) | 52.65 | 52.65 | 48 |
| protein content (wt%) | 1.72 | 1.72 | 1.71 |

Table IV:   (continued)

| product characterization examples 4-7 | | | |
|---|---|---|---|
| | Example 4 | Example 5 | Example 6 |
| pH | 4.84 | 4.74 | 4.75 |
| Stevens value 5 °C, (g) | 632 | 751 | 990 |
| Conductivity (mScm$^{-1}$, 10 °C) | 4.2 | 4.2 | 4.6 |
| dry matter (wt%) | 57.34 | 57.34 | 53.34 |
| free fat content (wt/wt%) | 66 | 62 | 68 |
| Viscosity (Pa.s) after 32 seconds (as defined) | 1.4 | 2.4 | 5.2 |
| (Pa.s. slope$^{-1}$) | 12 | 7.1 | 4.8 |
| Viscosity (Pa.s) after 302 seconds (as defined) | 0.9 | 1.5 | 2.0 |
| ND: Not determined | | | |

All products are spreadable from the refrigerator, show a butter like texture, have a fresh taste and a creamy, smooth mouthfeel.

## Comparative example A

The viscosity characteristics of a typical churned butter were determined with the method as indicated above:

- average decrease in viscosity (slope) in an interval of 4 seconds, measured during the first 32 seconds: 8 to 20 Pa.s per second at a shear rate of 10 s$^{-1}$.
- a viscosity after 32 seconds at a shear rate of 10 s$^{-1}$ of about 5 Pa.s and a viscosity after another 270 seconds of about 0.01 Pa.s at a shear rate of 10 s$^{-1}$.
- Applicants believe that the low viscosity value of 0.01 Pa.s after 302 seconds, is indicating a thin mouthfeel. The slope of 8 to 20 Pa.s per second at a shear rate of 10 s$^{-1}$ is believed to be indicative of a quick melting behaviour.
- Conductivity of butter was 0.00 mScm$^{-1}$, which is indicative of a fat continuous product.

## Comparative example B

90 parts dairy cream standardised to a fat content of 26% were pasteurised at 85°C for about 10 minutes, such that denaturation of the whey protein occurred, and mixed with a solution of 0.8 parts gelatin, 0.8% parts whey protein concentrate 70% and 0.3% parts salt, dissolved in 8 parts skimmilk.

After cooling down to a suitable temperature for culturing, a common acidulating culture was added, whereafter the fermentation was allowed to proceed until a pH value of about 4.8 was reached. The fermentation was stopped by heating to 80°C.

The product so obtained was homogenised at 100 bar, filled in ¼l containers, cooled down to below 10°C and stored at chill temperatures.

Said products showed an end viscosity of 3.5 Pa.s after 302 seconds. This is believed to be indicative of "thick" mouthfeel. Furthermore these products had a too high protein content which was noticeable in the mouthfeel upon consumption.

## Claims

1.  Process suitable for the preparation of a spreadable, acidified cream having a conductivity of 0.1-50 mScm$^{-1}$ at 10 °C, comprising 40 to 80 wt% fat, up to 3 % protein, the cream having a pH value of below 5.8, a Stevens hardness value at 5°C of 200-1000 g, and a Stevens hardness value at 20°C of 50-300 g, a free fat content (defined as the amount of fat liberated by subjecting the product to a heat treatment at 65 °C up to one hour) of 30-85 wt% on total fat, and said cream showing one of the following characteristics(A, B, C):

    (A) after heating for 32 seconds from 20 to 38°C, a viscosity of less than 10 Pa.s, preferably 0.05-10 Pa.s, more preferred 3-10 Pa.s, most preferred 5-8 Pa.s at a shear rate of 10 s$^{-1}$;

(B) after heating for 32 seconds from 20 to 38°C, followed by a slow increase of temperature to 40°C over a period of 270 seconds, a viscosity between 0.05 and 2.5 Pa.s, more preferred between 0.05 and 2 Pa.s, even more preferred between 0.05 and 1.6 Pa.s, most preferred between 0.1 and 1.4 Pa.s at a shear rate of 10 s$^{-1}$;

(C) in one interval of 4 seconds during the 32 second measurement period, wherein the product is heated from 20 to 38°C, an average decrease in viscosity of 2-15 Pa.s per second at a shear rate of 10 s$^{-1}$;

wherein the process comprises the steps:

a) an emulsion of fat in aqueous phase is prepared at 10-60°C;
b) the emulsion is homogenized at 150-200 bar;
c) the emulsion is cooled to the acidification temperature of 20-50°C;
d) the emulsion is acidified to a pH of less than 5.8;
e) optionally other ingredients such as gelatin, thickeners, stabilizers, flavour, colouring agents, preservatives, salt are added;
f) the emulsion is subjected to a heat treatment at 60-90°C for 5 seconds to 15 minutes, preferably under low shear;
g) the emulsion is homogenized at 60-90°C and at 50 to 150 bar;
h) the emulsion is optionally cooled to 5-60°C;
i) the product is filled in the package and cooled to 5-15°C;
j) the packed product is left to stabilize for 1-10 days at 5-15°C.

2. Process according to claim 1, **characterised in that** the homogenisation before acidification according to step b is carried out at 40-60°C and 150-200 bar, and the homogenisation after acidification according to step g is carried out at 60-90°C and 50-150 bar.

3. Process according to claim 1 or 2, **characterized in that** in step i the product is hot filled at a temperature of 60-90°C.

4. Spreadable, acidified cream obtainable by the process according to any of claims 1-3.

5. Cream according to claim 4, **characterized in that** said cream shows two, preferably three of the characteristics (A-C) as defined in claim 1.

6. Cream according to any of claims 4-5 **characterized in that** the protein is milk protein obtainable from a dairy source, which source can be selected from the group comprising skim milk, butter milk, concentrated milk protein, whey protein, butter serum, whole milk, fresh cheese, another suitable milk protein source, and combinations thereof.

7. Cream according to any of claims 4-6, **characterised in that** the total amount of protein present is between 0.1 and 3 wt%, more preferably between 0.8 and 2.3 wt%, most preferred between 0.8 and 1.8 wt%.

8. Cream according to any of claims 4-7, **characterized in that** 0.01-1 wt%, preferably 0.05-0.3 wt% protein, derived from butter serum is present.

9. Cream according to any of claims 4-8, **characterised in that** the percentage of free fat is 40-80 wt%, preferably 50-75 wt% on total fat.

10. Cream according to any of claims 4-9, **characterized in that** said cream comprises 40-70 wt% fat, most preferred 45-60 wt% fat.

11. Cream according to any of claims 4-10, **characterized in that** the weight ratio of fat content to protein content in the product is within the range of from 70:1 (weight ratio) to 12:1 (weight ratio), preferably 60:1 to 25:1, most preferred 40:1 to 30:1.

12. Cream according to any of claims 4-11, **characterized in that** the fat blend of said acidified cream shows a solid fat content at 10 °C between 40 and 80 and a solid fat content at 25 °C between 5 and 15 and a solid fat content at 35 °C between 0 and 5, in combination with the difference between the solid fat content at 10 °C and the solid fat content at 35 °C being between 35 and 65.

**Patentansprüche**

1.  Verfahren, geeignet für die Herstellung einer streichfähigen, gesäuerten Creme mit einer Leitfähigkeit von 0,1 bis 50 mScm$^{-1}$ bei 10°C, umfassend 40 bis 80 Gew.-% Fett, bis zu 3 % Protein, wobei die Creme einen pH-Wert unter 5,8, einen Stevens-Härtewert bei 5°C von 200 bis 1000 g und einen Stevens-Härtewert bei 20°C von 50 bis 300 g, einen Gehalt an freiem Fett (definiert als die Menge an Fett, die beim Unterziehen des Produkts einer Wärmebehandlung bei 65°C bis zu 1 Stunde freigesetzt wird) von 30 bis 85 Gew.-%, bezogen auf das Gesamtfett, aufweist, und die Creme eine der nachfolgenden Charakteristika (A, B, C) zeigt:

    (A) nach dem Erhitzen von 20 auf 38°C in 32 Sekunden eine Viskosität von weniger als 10 Pa.s, vorzugsweise 0,05 bis 10 Pa.s, insbesondere bevorzugt 3 bis 10 Pa.s, ganz besonders bevorzugt 5 bis 8 Pa.s, bei einer Scherungsgeschwindigkeit von 10 s$^{-1}$;

    (B) nach dem Erhitzen von 20 auf 38°C in 32 Sekunden, gefolgt von einem langsamen Temperaturanstieg auf 40°C über eine Zeitspanne von 270 Sekunden, eine Viskosität zwischen 0,05 und 2,5 Pa.s, insbesondere bevorzugt zwischen 0,05 und 2 Pa.s, noch mehr bevorzugt zwischen 0,05 und 1,6 Pa.s, ganz besonders bevorzugt zwischen 0,1 und 1,4 Pa.s, bei einer Scherungsgeschwindigkeit von 10 s$^{-1}$;

    (C) in einem Intervall von 4 Sekunden während der 32 Sekunden Messdauer, in der das Produkt von 20 auf 38°C erhitzt wird, eine durchschnittliche Viskositätsabnahme von 2 bis 15 Pa.s pro Sekunden bei einer Scherungsgeschwindigkeit von 10 s$^{-1}$,

    worin das Verfahren die Schritte umfasst:

    a) eine Emulsion von Fett in wässeriger Phase wird bei 10 bis 60°C hergestellt,
    b) die Emulsion wird bei 150 bis 200 bar homogenisiert,
    c) die Emulsion wird auf die Säuerungstemperatur von 20 bis 50°C abgekühlt,
    d) die Emulsion wird auf einen pH von weniger als 5,8 angesäuert,
    e) gegebenenfalls werden andere Bestandteile, wie Gelatine, Verdicker, Stabilisatoren, Aroma, Farbmittel, Konservierungsmittel, Salz zugegeben,
    f) die Emulsion wird einer Wärmebehandlung bei 60 bis 90°C für 5 Sekunden bis 15 Minuten, vorzugsweise unter niedriger Scherung, unterzogen,
    g) die Emulsion wird bei 60 bis 90°C und bei 50 bis 150 bar homogenisiert,
    h) die Emulsion wird gegebenenfalls auf 5 bis 60°C abgekühlt,
    i) das Produkt wird in die Verpackung gefüllt und auf 5 bis 15°C abgekühlt und
    j) das verpackte Produkt wird zum Stabilisieren für 1 bis 10 Tage bei 5 bis 15°C stehen gelassen.

2.  Verfahren nach Anspruch 1, **dadurch gekennzeichnet, dass** die Homogenisierung vor der Ansäuerung gemäß Schritt b bei 40 bis 60°C und 150 bis 200 bar und die Homogenisierung nach Ansäuerung gemäß Schritt g bei 60 bis 90°C und 50 bis 150 bar durchgeführt wird.

3.  Verfahren nach Anspruch 1 oder 2, **dadurch gekennzeichnet, dass** das Produkt in Schritt i bei einer Temperatur von 60 bis 90°C heiß abgefüllt wird.

4.  Streichfähige, gesäuerte Creme, erhältlich durch das Verfahren nach irgendeinem der Ansprüche 1 bis 3.

5.  Creme nach Anspruch 4, **dadurch gekennzeichnet, dass** die Creme zwei, bevorzugt drei der Charakteristika (A bis C), wie in Anspruch 1 definiert, zeigt.

6.  Creme nach irgendeinem der Ansprüche 4 oder 5, **dadurch gekennzeichnet, dass** das Protein Milchprotein darstellt, erhältlich aus einer Molkereiquelle, wobei die Quelle ausgewählt sein kann aus der Gruppe, bestehend aus Magermilch, Buttermilch, konzentriertem Milchprotein, Molkeprotein, Buttermolke, Vollmilch, Frischkäse, einer weiteren geeigneten Milchproteinquelle und Kombinationen hiervon.

7.  Creme nach irgendeinem der Ansprüche 4 bis 6, **dadurch gekennzeichnet, dass** die Gesamtmenge an vorhandenem Protein zwischen 0,1 und 3 Gew.-%, insbesondere bevorzugt zwischen 0,8 und 2,3 Gew.-%, ganz besonders bevorzugt zwischen 0,8 und 1,8 Gew.-%, liegt.

8. Creme nach irgendeinem der Ansprüche 4 bis 7, **dadurch gekennzeichnet, dass** 0,01 bis 1 Gew.-%, bevorzugt 0,05 bis 0,3 Gew.-%, Protein, das von Buttermolke stammt, vorliegt.

9. Creme nach irgendeinem der Ansprüche 4 bis 8, **dadurch gekennzeichnet, dass** der Prozentsatz an freiem Fett 40 bis 80 Gew.-%, bevorzugt 50 bis 75 Gew.-%, bezogen auf das Gesamtfett, beträgt.

10. Creme nach irgendeinem der Ansprüche 4 bis 9, **dadurch gekennzeichnet, dass** die Creme 40 bis 70 Gew.-% Fett, ganz besonders bevorzugt 45 bis 60 Gew.-% Fett, umfasst.

11. Creme nach irgendeinem der Ansprüche 4 bis 10, **dadurch gekennzeichnet, dass** das Gewichtsverhältnis von Fettgehalt zu Proteingehalt im Produkt im Bereich von 70:1 (Gewichtsverhältnis) bis 12:1 (Gewichtsverhältnis), bevorzugt 60:1 bis 25:1, ganz besonders bevorzugt 40:1 bis 30:1 beträgt.

12. Creme nach irgendeinem der Ansprüche 4 bis 11, **dadurch gekennzeichnet, dass** die Fettmischung der gesäuerten Creme bei 10°C einen Festfettgehalt zwischen 40 und 80 und bei 25°C einen Festfettgehalt zwischen 5 und 15 und bei 35°C einen Festfettgehalt zwischen 0 und 5 zeigt, in Kombination damit, dass der Unterschied zwischen dem Festfettgehalt bei 10°C und dem Festfettgehalt bei 35°C zwischen 35 und 65 liegt.

## Revendications

1. Procédé approprié pour la préparation d'une crème tartinable acidifiée ayant une conductivité de 0,1 - 50 mScm-1 à 10°C, comprenant de 40 à 80 % en poids de graisse, jusqu'à 3 % de protéine, la crème ayant une valeur de pH inférieure à 5,8, une valeur de dureté de Stevens à 5°C de 200 - 1.000 g. et une valeur de dureté de Stevens à 20°C de 50 - 300 g, une teneur en graisse libre (définie comme étant la quantité de graisse libérée en soumettant le produit à un traitement thermique à 65°C pendant jusqu'à une heure) de 30 - 85 % en poids sur la base de la graisse totale, ladite crème ayant l'une des caractéristiques suivante (A, B, C):

A. après chauffage pendant 32 secondes à une température de 20 à 38°C, une viscosité inférieure à 10 Pa. s, de préférence de 0,05 à 10 Pa.s, de façon plus préférée de 3 à 10 Pa.s, de façon plus préférée de 5 à 8 Pa.s à un taux de cisaillement de 10 s$^{-1}$ :

B. après chauffage pendant 32 secondes à une température de 20 à 38°C, suivi d'une augmentation lente de la température jusqu'à 40°C sur une période de 270 secondes, une viscosité comprise entre 0,05 et 2,5 Pa. s, de façon préférée de 0,05 à 2 Pa.s et de façon plus préférée encore de 0,05 à 1,6 Pa.s, le plus préférentiellement de 0,1 à 1,4 Pa.s à un taux de cisaillement de 10 s$^{-1}$ ;

C. sur un intervalle de 4 secondes pendant les 32 secondes de période de mesure, pendant laquelle le produit est chauffé de 20 à 38°C, une baisse moyenne de la viscosité de 2 - 15 Pa.s par seconde à un taux de cisaillement de 10 s$^{-1}$ ;

dans lequel ledit procédé comprend les étapes consistant à :

a) préparer une émulsion de graisse dans une phase aqueuse à 10 - 60°C ;
b) homogénéiser le mélange à 150 - 200 bars ;
c) refroidir l'émulsion à la température d'acidification de 20 - 50°C ;
d) acidifier l'émulsion à un pH inférieur à 5,8 ;
e) ajouter optionnellement d'autres ingrédients tels que de la gélatine, des épaississants, des stabilisateurs, des agents de sapidité, des agents colorants, des conservateurs et du sel ;
f) soumettre l'émulsion à un traitement thermique à 60 - 90°C pendant de 5 secondes à 15 minutes, de préférence dans des conditions de faible cisaillement ;
g) homogénéiser l'émulsion à 60 - 90°C et à 50 à 150 bars ;
h) optionnellement refroidir l'émulsion à 5 - 60°C ;
i) placer le produit dans un emballage et le refroidir à 5 - 15°C ;
j) laisser le produit emballé se stabiliser pendant de 1 à 10 jours à 5 - 15°C.

**2.** Procédé selon la revendication 1, **caractérisé en ce que** l'homogénéisation avant l'acidification dans le cadre de l'étape b est menée à bien à une température de 40 - 60°C et à 150 - 200 bars, et dans lequel l'homogénéisation après l'acidification dans le cadre de l'étape g est effectuée à 60 - 90°C et à 50 - 150 bars.

**3.** Procédé selon la revendication 1 ou la revendication 2, **caractérisé en ce que** dans le cadre de l'étape i), le produit est placé chaud dans les récipients, à une température de 60 - 90°C.

**4.** Crème acidifiée tartinable pouvant être obtenue par le procédé selon l'une quelconque des revendications 1 - 3.

**5.** Crème selon la revendication 4, **caractérisée en ce que** ladite crème a deux, de préférence 3 des caractéristiques (A, B, C) telles que définies à la revendication 1.

**6.** Crème selon l'une quelconque des revendications 4 - 5, **caractérisée en ce que** la protéine de lait pouvant être obtenue à partir d'une source laitière, ladite source pouvant être sélectionnée à partir du groupe comprenant le lait écrémé, le babeurre, la protéine de lait concentré, la protéine de petit lait, le lactosérum, le lait entier, le fromage frais, une autre source de protéine de lait appropriée, et des combinaisons de celles-ci.

**7.** Crème selon l'une quelconque des revendications 4 - 6, **caractérisée en ce que** la quantité totale de protéine présente est comprise entre 0,1 et 3 % en poids, de façon plus préférentielle entre 0,8 et 2,3 % en poids, de la façon la plus préférée entre 0,8 et 1,8 % en poids.

**8.** Crème selon l'une quelconque des revendications 4 à 7, **caractérisée en ce que** de 0,01 à 1 % en poids, de préférence de 0,05 à 0,3 % en poids de protéine dérivée de lactosérum sont présents.

**9.** Crème selon l'une quelconque des revendications 4 à 8, **caractérisée en ce que** le pourcentage de graisse libre est de 40 à 80 % en poids, de préférence de 50 à 75 % en poids de la graisse totale.

**10.** Crème selon l'une quelconque des revendications 4 à 9, **caractérisée en ce que** ladite crème comprend de 40 à 70 % en poids de graisse, de façon plus préférentielle de 45 à 60 % en poids de graisse.

**11.** Crème selon l'une quelconque des revendications 4 à 10, **caractérisée en ce que** le rapport en poids entre la teneur en graisse et la teneur en protéine dans le produit est compris dans la gamme allant de 70 pour 1 (rapport en poids) à 12 pour 1 (rapport en poids), de préférence de 60 pour 1 à 25 pour 1 de la façon la plus préférée de 40 pour 1 à 30 pour 1.

**12.** Crème selon l'une quelconque des revendications 4 à 11, **caractérisée en ce que** le mélange de graisse de ladite crème acidifiée à une teneur en graisse solide à 10°C comprise entre 40 et 80, et une teneur en graisse solide à 25°C comprise entre 5 et 15 et une teneur en graisse solide à 35°C comprise entre 0 et 5, ceci étant combiné au fait que la différence entre la teneur solide à 10°C et la teneur en graisse solide à 35°C étant comprise entre 35 et 65.